# EUROPÄISCHE PATENTSCHRIFT

(11) **EP 2 886 381 B1**
(45) Veröffentlichungstag und Bekanntmachung des Hinweises auf die Patenterteilung: **13.09.2017**
(21) Anmeldenummer: 14193124.6
(22) Anmeldetag: 14.11.2014
(51) Int. Cl.: B60K 6/12

(54) **Antriebssystem, insbesondere für eine selbstfahrende Baumaschine, insbesondere Bodenverdichter**
Drive system, in particular for a self-propelled construction machine, in particular soil compactor
Système d'entraînement, en particulier pour un engin automobile, en particulier un rouleau compresseur

(30) Priorität: 20.12.2013 DE 102013227032
(43) Veröffentlichungstag der Anmeldung: 24.06.2015
(73) Patentinhaber: Hamm AG, 95643 Tirschenreuth (DE)
(72) Erfinder: Röhr, Andreas, 92637 Weiden (DE); Henker, Thomas, 95643 Tirschenreuth (DE); Pieske, Ronny, 08297 Zwönitz (DE)
(74) Vertreter: Ruttensperger, Bernhard

(56) Entgegenhaltungen:
- EP-A1- 1 935 697
- DE-A1-102010 063 255
- DE-A1-102011 104 919

## Beschreibung

Die vorliegende Erfindung betrifft ein Antriebssystem gemäß dem Oberbegriff des Anspruchs 1, insbesondere für eine selbstfahrende Baumaschine, insbesondere Bodenverdichter, umfassend:
- ein Antriebsaggregat,
- wenigstens einen Hydraulikkreislauf mit einer durch das Antriebsaggregat antreibbaren Hydraulikpumpe,
- eine Hydraulik-Antriebsunterstützungseinheit mit einer HydraulikPumpe/Motor-Baugruppe und wenigstens einem Druckfluidspeicher, wobei die Hydraulik-Pumpe/Motor-Baugruppe mit dem Antriebsaggregat oder/und wenigstens einem Hydraulikkreislauf antriebsmäßig gekoppelt oder koppelbar ist, wobei die Hydraulik-Pumpe/Motor-Baugruppe in einem Ladebetriebszustand durch das Antriebsaggregat oder/und wenigstens einen Hydraulikkreislauf als Pumpe zum Beladen wenigstens eines Druckfluidspeichers betreibbar ist und in einem Antriebsunterstützungsbetriebszustand als Motor zur Bereitstellung eines Antriebsunterstützungsdrehmomentes für die Hydraulikpumpe wenigstens eines Hydraulikkreislaufs betreibbar ist.

Aus der WO 2013/074164A1 ist ein Antriebssystem einer als Radlader ausgebildeten Baumaschine bekannt. Bei diesem bekannten Antriebssystem ist ein Antriebsaggregat über eine Getriebeanordnung mit verschiedenen Hydraulikkreisläufen antriebsmäßig gekoppelt. Diese Hydraulikkreisläufe umfassen einen Hydraulik-Fahrkreislauf mit einer durch das Antriebsaggregat antreibbaren Hydraulik-Fahrpumpe und einem im Betrieb der Hydraulik-Fahrpumpe durch das strömende Fluid angetriebenen Hydraulik-Fahrmotor zum Antrieb der Antriebsräder des Radladers. Ferner sind ein bzw. mehrere Hydraulik-Arbeitskreisläufe vorgesehen. Auch diese umfassen jeweils eine durch das Antriebsaggregat über die Getriebeanordnung antreibbare Hydraulik-Arbeitspumpe. Durch den durch diese Pumpen generierten Hydraulikdruck können beispielsweise Kolben/Zylinder-Einheiten aktiviert werden, um im Arbeitsbetrieb des Radladers eine Schaufel zu bewegen. Dieses Antriebssystem umfasst ferner eine Hydraulik-Antriebsunterstützungseinheit. Diese umfasst eine durch das Antriebsaggregat über die Getriebeanordnung antreibbare Hydraulik-Pumpe/Motor-Baugruppe, welche im Pumpenbetrieb einen Druckfluidspeicher lädt, also den Druck des darin gespeicherten Fluids erhöht. Die HydraulikPumpe/Motor-Baugruppe dieser Hydraulik-Antriebsunterstützungseinheit kann auch als Hydraulikmotor betrieben werden, um unter Entspannung des Drucks in dem Druckfluidspeicher ein Drehmoment zu generieren, welches über die Getriebeanordnung auf die verschiedenen Hydraulikkreisläufe, also den Hydraulik-Fahrkreislauf und den bzw. die Hydraulik-Arbeitskreisläufe übertragen werden kann. Die Hydraulik-Antriebsunterstützungseinheit kann somit ein Antriebsunterstützungsdrehmoment liefern.

Ein Antriebssystem gemäß dem Oberbegriff des Oberbegriffs des Anspruchs 1 ist aus der DE 10 2010 063 255 A1 bekannt. Eine durch einen Nebenantrieb eines Abtriebsaggregats antreibbare Hydraulik-Pumpe/Motor-Baugruppe kann dazu genutzt werden, über ein umschaltbares Ventil einen Druckspeicher zu beladen. Hierzu stellt das umschaltbare Ventil eine Strömungsverbindung von einem Fluidreservoir über die Hydraulik-Pumpe/Motor-Baugruppe zum Druckspeicher her. In diesem Stellzustand des Ventils kann ferner die Hydraulik-Pumpe/Motor-Baugruppe dazu genutzt werden, ein Unterstützungsdrehmoment in das Antriebsaggregat einzuleiten. In einer weiteren Ventilstellung kann dieses eine Verbindung zwischen dem Druckspeicher und dem Fluidreservoir herstellen, um den im Druckspeicher enthaltenen Druck zu entspannen. In einer weiteren Ventilstellung sperrt das Ventil den Druckspeicher ab und stellt eine Verbindung von dem Fluidreservoir über die Hydraulik-Pumpe/Motor-Baugruppe zum Fluidreservoir her.

Aus der DE 10 2011 104 919 A1 ist ein Antriebssystem bekannt, bei welchem durch ein Antriebsaggregat antreibbare Hydromotoren zum Beladen eines Druckspeichers genutzt werden. In Zuordnung zu den Hydromotoren kann ein Umwälzbetrieb erfolgen, in welchem das im Bereich der Hydromotoren und diese anbindende Leitungen vorhandene Fluid umgewälzt wird.

Es ist die Aufgabe der vorliegenden Erfindung, ein Antriebssystem, insbesondere für eine selbstfahrende Baumaschine, insbesondere Bodenverdichter, vorzusehen, welches bei effizienter Ausnutzung der zur Verfügung stehenden Energiequellen Antriebsaggregat und Hydraulik-Antriebsunterstützungseinheit eine übermäßige Belastung einer Hydraulik-Antriebsunterstützungseinheit vermeidet.

Erfindungsgemäß wird diese Aufgabe gelöst durch ein Antriebssystem, insbesondere für eine selbstfahrende Baumaschine, insbesondere Bodenverdichter gemäß Anspruch 1. Dieses umfasst:
- ein Antriebsaggregat,
- wenigstens einen Hydraulikkreislauf mit einer durch das Antriebsaggregat antreibbaren Hydraulikpumpe,
- eine Hydraulik-Antriebsunterstützungseinheit mit einer HydraulikPumpe/Motor-Baugruppe und wenigstens einem Druckfluidspeicher, wobei die Hydraulik-Pumpe/Motor-Baugruppe mit dem Antriebsaggregat oder/und wenigstens einem Hydraulikkreislauf antriebsmäßig gekoppelt oder koppelbar ist, wobei die Hydraulik-Pumpe/Motor-Baugruppe in einem Ladebetriebszustand durch das Antriebsaggregat oder/und wenigstens einen Hydraulikkreislauf als Pumpe zum Beladen wenigstens eines Druckfluidspeichers betreibbar ist und in einem Antriebsunterstützungsbetriebszustand als Motor zur Bereitstellung eines Antriebsunterstützungsdrehmomentes für die Hydraulikpumpe wenigstens eines Hydraulikkreislaufs betreibbar ist.

Dabei ist weiter vorgesehen, dass die Hydraulik-Pumpe/Motor-Baugruppe in einem Umwälzbetriebszustand als Pumpe zum Fördern von Fluid aus einem Fluidreservoir und in ein Fluidreservoir betreibbar ist.

Bei dem erfindungsgemäß aufgebauten Antriebssystem kann durch das Bereitstellen des Umwälzbetriebszustands dafür gesorgt werden, dass, beispielsweise ohne den Beladungszustand eines Druckfluidspeichers zu verändern, die Hydraulik-Pumpe/Motor-Baugruppe von Fluid durchströmt wird, welches Wärme aus dem Bereich der Hydraulik-Pumpe/Motor-Baugruppe abführt. Somit kann eine Überhitzung dieser Baugruppe insbesondere dann vermieden werden, wenn diese permanent an eine Getriebeanordnung angekoppelt ist und somit die Möglichkeit besteht, dass diese Hydraulik-Pumpe/Motor-Baugruppe auch über eine längere Zeitdauer hinweg dann betrieben, also zur Drehung angetrieben wird, wenn an sich die Förderung von Fluid nicht erforderlich ist.

In diesem Umwälzbetriebszustand wird vorteilhafterweise die HydraulikPumpe/Motor-Baugruppe durch das Antriebsaggregat angetrieben.

Das Betreiben der Hydraulik-Pumpe/Motor-Baugruppe im Umwälzbetriebszustand kann dann erforderlich sein, wenn der Ladezustand wenigstens eines Druckfluidspeichers über einer Schwellenbeladung ist und eine Antriebsdrehzahl des Antriebsaggregats unter einer Schwellendrehzahl ist. Erfindungsgemäß sind diese beiden Bedingungen gleichzeitig zu erfüllen, um die HydraulikPumpe/Motor-Baugruppe in den Umwälzbetriebszustand zu schalten. Somit kann insbesondere dann, wenn das Antriebsaggregat des Antriebssystems beispielsweise in einen Leerlaufzustand, also einen Zustand mit vergleichsweise geringer Drehzahl gestellt wird, beispielsweise weil vorübergehend kein Arbeitsbetrieb erforderlich ist, eine übermäßige Belastung des in diesem Zustand mit vergleichsweise geringem Antriebsdrehmoment laufenden Antriebsaggregats vermieden werden, da die Hydraulik-Pumpe/Motor-Baugruppe lediglich zum Umwälzen von Fluid betrieben wird und hierzu nur ein vergleichsweise geringes Drehmoment vom Antriebsaggregat gefordert wird.

Beispielsweise kann vorgesehen sein, dass die Schwellenbeladung ein Ladezustand mit einer Beladung im Bereich von 60 bis 80 %, vorzugsweise etwa 70 %, einer maximalen Beladung des wenigstens einen Druckspeichers ist oder/und dass die Schwellendrehzahl eine Drehzahl im Bereich von 1000 bis 1200 Umdrehungen pro Minute, vorzugsweise etwa 1100 Umdrehungen pro Minute ist.

Um bei dem erfindungsgemäßen Antriebssystem in einfacher Weise die Fluidströmungsverbindung des wenigstens einen Druckfluidspeichers mit der Hydraulik-Pumpe/Motor-Baugruppe einerseits und einem Fluidreservoir andererseits bereitstellen zu können, wird vorgeschlagen, dass die Hydraulik-Antriebsunterstützungseinheit eine Lade/Entlade-Ventileinheit zum wahlweisen Freigeben/Unterbrechen einer Strömungsverbindung zwischen der HydraulikPumpe/Motor-Baugruppe und wenigstens einem Druckfluidspeicher wenigstens in Strömungsrichtung vom Druckfluidspeicher zur Hydraulik-Pumpe/Motor-Baugruppe umfasst und eine Entspannungs-Ventileinheit zum wahlweisen Freigeben/Unterbrechen einer Strömungsverbindung zwischen wenigstens einem Druckfluidspeicher und einem Fluidreservoir wenigstens in Strömungsrichtung vom Druckfluidspeicher zum Fluidreservoir umfasst.

Dabei ist aus Sicherheitsgründen vorteilhafterweise vorgesehen, dass die Lade/Entlade-Ventileinheit in einen die Strömungsverbindung unterbrechenden Grundzustand vorgespannt ist oder/und dass die Entspannungs-Ventileinheit in einen die Strömungsverbindung freigebenden Grundzustand vorgespannt ist.

Um bei dem derart aufgebauten Kreislauf in einfacher Weise den Umwälzbetriebszustand einstellen zu können, wird vorgeschlagen, dass die Hydraulik-Antriebsunterstützungseinheit eine Umwälz-Ventileinheit im Strömungsweg zwischen der Hydraulik-Pumpe/Motor-Baugruppe und einem Fluidreservoir umfasst zum wahlweisen Freigeben/Unterbrechen einer Strömungsverbindung zwischen der Hydraulik-Pumpe/Motor-Baugruppe und dem Fluidreservoir wenigstens in Strömungsrichtung von der Hydraulik-Pumpe/Motor-Baugruppe zum Fluidreservoir.

Um im Umwälzbetriebszustand dafür zu sorgen, dass lediglich ein gedrosselter Fluidstrom in Richtung zum Fluidreservoir gefördert wird, wird vorgeschlagen, dass im Strömungsweg zwischen der Hydraulik-Pumpe/Motor-Baugruppe und einem Fluidreservoir, vorzugsweise im Strömungsweg zwischen der Hydraulik-Pumpe/Motor-Baugruppe und der Umwälz-Ventileinheit, eine Strömungsdrosselanordnung vorgesehen ist.

Zum Erhöhen der Betriebssicherheit kann auch in Zuordnung zur Umwälz-Ventileinheit vorgesehen sein, dass diese in einen die Strömungsverbindung zwischen der Hydraulik-Pumpe/Motor-Baugruppe und einem Fluidreservoir freigebenden Grundzustand vorgespannt ist.

Bei einer baulich einfach zu realisierenden Ausgestaltung kann die Hydraulik-Antriebsunterstützungseinheit einen offenen Kreislauf umfassen. Weiter kann vorteilhafterweise vorgesehen sein, zwischen wenigstens einem Fluidkreislauf, vorzugsweise jedem Fluidkreislauf, und der Hydraulik-Antriebsunterstützungseinheit keine Fluidaustauschverbindung besteht. Somit können ohne entsprechende bauliche Anforderung bei der Hydraulik-Antriebsunterstützungseinheit ein bzw. mehrere Fluidkreisläufe als geschlossene Hochdruckkreisläufe aufgebaut sein.

Das Antriebsaggregat umfasst vorteilhafterweise eine Diesel-Brennkraftmaschine, welche bereits bei vergleichsweise geringem Hubraum ein vergleichsweise großes Antriebsdrehmoment liefern kann und überdies einen effizienten Kraftstoffeinsatz gewährleistet.

Die Erfindung betrifft ferner eine selbstfahrende Baumaschine, insbesondere Bodenverdichter, umfassend ein erfindungsgemäß aufgebautes Antriebssystem, bei welchem die vorangehend diskutierten Baugruppen bzw. Ausgestaltungsvarianten einzeln oder in beliebiger Kombination miteinander vorgesehen sein können.

Ferner betrifft die vorliegende Erfindung ein Verfahren zum Betreiben eines Antriebssystem, insbesondere für eine selbstfahrende Baumaschine, insbesondere Bodenverdichter, das Antriebssystem umfassend ein Antriebsaggregat, wenigstens einen Hydraulikkreislauf mit einer durch das Antriebsaggregat antreibbaren Hydraulikpumpe, eine Hydraulik-Antriebsunterstützungseinheit mit einer Hydraulik-Pumpe/Motor-Baugruppe und wenigstens einem Druckfluidspeicher, wobei die Hydraulik-Pumpe/Motor-Baugruppe mit dem Antriebsaggregat oder/und wenigstens einem Hydraulikkreislauf antriebsmäßig gekoppelt oder koppelbar ist, wobei die Hydraulik-Pumpe/Motor-Baugruppe in einem Ladebetriebszustand durch das Antriebsaggregat oder/und wenigstens einen Hydraulikkreislauf als Pumpe zum Beladen wenigstens eines Druckfluidspeichers betreibbar ist und in einem Antriebsunterstützungsbetriebszustand als Motor zur Bereitstellung eines Antriebsunterstützungsdrehmomentes für die Hydraulikpumpe wenigstens eines Hydraulikkreislaufs betreibbar ist, bei welchem Verfahren die Hydraulik-Pumpe/Motor-Baugruppe in einem Umwälzbetriebszustand als Pumpe zum Fördern von Fluid aus einem Fluidreservoir und in ein Fluidreservoir betrieben wird.

Die Hydraulik-Pumpe/Motor-Baugruppe wird zum Verringern des von einem Antriebsaggregat geforderten Drehmoments einerseits und zum Vermeiden einer Überhitzung derselben andererseits dann im Umwälzbetriebszustand betrieben, wenn ein Ladezustand wenigstens eines Druckfluidspeichers über einer vorbestimmten Schwellenbeladung ist oder/und eine Antriebsdrehzahl des Antriebsaggregats unter einer vorbestimmten Schwellendrehzahl ist.

Um ein zu häufiges Übergehen in den Umwälzbetriebszustand dann, wenn beispielsweise aufgrund kurzzeitiger starker Belastung die Drehzahl des Antriebsaggregats kurzzeitig unter die Schwellendrehzahl gedrückt wird, zu vermeiden, wird vorgeschlagen, dass die Hydraulik-Pumpe/Motor-Baugruppe eine vorbestimmte Zeitdauer nach Unterschreiten der Schwellendrehzahl zum Bereitstellen des Umwälzbetriebszustands betrieben wird, wenn der Ladezustand wenigstens eines Druckspeichers über der vorbestimmten Schwellenbeladung ist. Steigt innerhalb dieser vorbestimmten Zeitdauer die Drehzahl des Antriebsaggregats wieder über die Schwellendrehzahl an, so kann das Übergehen in den Umwälzbetriebszustand unterbunden werden.

Die Erfindung wird nachfolgend mit Bezug auf die beiliegenden Figuren detailliert beschrieben. Es zeigt:
- Fig. 1: in prinzipartiger Darstellung den Aufbau eines Antriebssystems für eine selbstfahrende Baumaschine;
- Fig. 2: eine als selbstfahrender Bodenverdichter ausgebildete Baumaschine, in welcher das Antriebssystem der Fig. 1 zur Anwendung kommen kann.

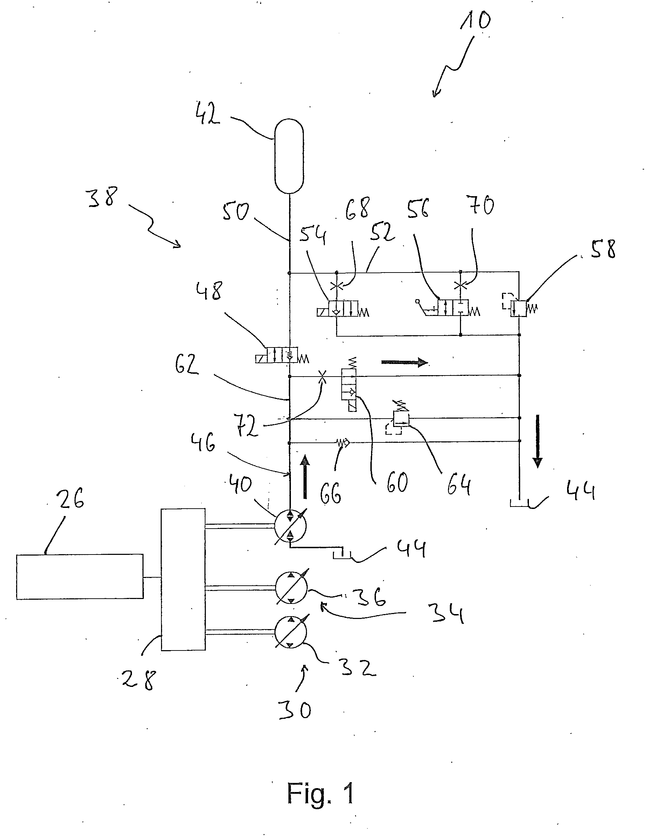

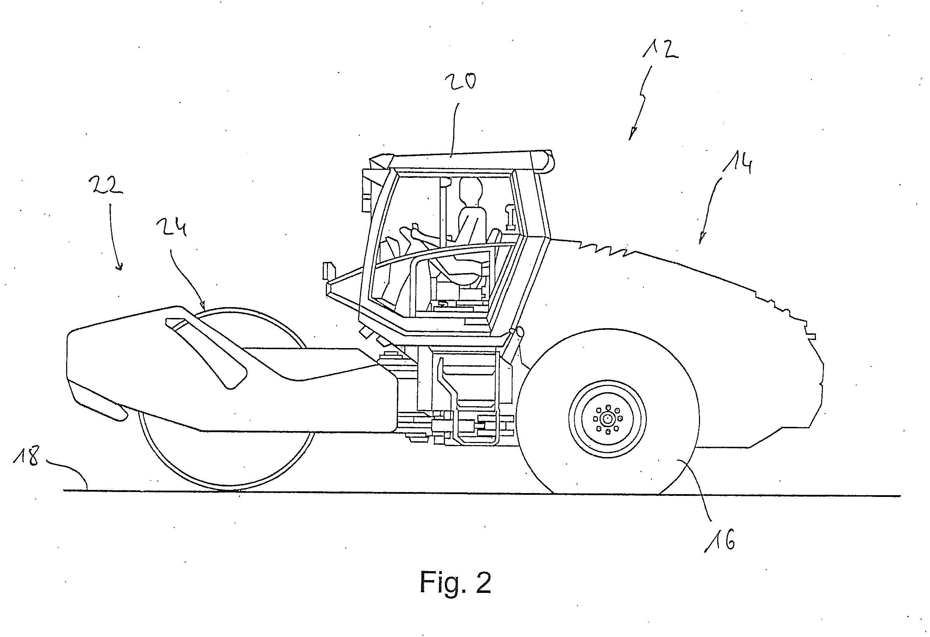

Bevor im Folgenden mit Bezug auf die Fig. 1 ein erfindungsgemäßes Antriebssystem 10 detailliert erläutert wird, wird im Folgenden mit Bezug auf die Fig. 2 der grundsätzliche Aufbau einer Baumaschine 12 erläutert, in welche das Antriebssystem 10 der Fig. 1 integriert werden kann. Diese Baumaschine 10 umfasst an einem Hinterwagen 14 Antriebsräder 16, die durch das Antriebssystem 10 zur Voranbewegung der als Bodenverdichter ausgebildeten Baumaschine 12 auf dem zu verdichtenden Untergrund 18 angetrieben werden können. Am Hinterwagen 14 ist ferner eine Führerkabine 20 vorgesehen, in welcher eine die Baumaschine 12 steuernde Person Platz findet und von welcher aus die verschiedenen Funktionalitäten der Baumaschine 12 gesteuert werden können.

An einem zum Lenken der als Bodenverdichter ausgebildeten Baumaschine 12 mit dem Hinterwagen 14 gelenkig verbundenen Vorderwagen 22 ist eine Verdichterwalze 24 vorgesehen. Mit dieser Verdichterwalze 24 wird der Untergrund 18, auf welchem die Baumaschine 12 sich bewegt, verdichtet. Um diesen Verdichtungsvorgang in definierter Art und Weise durchführen zu können, kann der Verdichterwalze 24 eine Unwuchtmassenanordnung zugeordnet sein, die beispielsweise im Inneren der Verdichterwalze 24 augenommen sein kann und zur Erzeugung einer Vibrationsbewegung, also einer periodischen Auf-Ab-Bewegung der Verdichterwalze 24, oder/und zur Erzeugung einer Oszillationsbewegung, also einer Hin-Her-Bewegung der Verdichterwalze 24 in Umfangsrichtung, in Betrieb gesetzt werden kann. Auch hierzu kann, wie im Folgenden noch dargelegt, das in Fig. 1 dargestellte Antriebssystem 10 eingesetzt werden.

Es sei darauf hingewiesen, dass in Fig. 2 die in Form eines Bodenverdichters dargestellte Baumaschine 12 nur hinsichtlich ihrer wesentlichen Aspekte und nur als ein Beispiel einer Maschine dargestellt ist, in welcher das Antriebssystem 10 der Fig. 1 Anwendung finden kann. Beispielsweise könnte bei Ausgestaltung als Bodenverdichter dieser anstelle der Antriebsräder 16 mit einer weiteren, dann beispielsweise auch zum Vortrieb des Bodenverdichters durch das Antriebssystem 10 der Fig. 1 zur Drehung anzutreibenden Verdichterwalze ausgestaltet sein. Auch könnte die Baumaschine 12 in Form eines Radladers, einer Planierraupe, eines Baggers oder dergleichen ausgebildet sein.

Das Antriebssystem 10 der Fig. 1 umfasst als Hauptenergiequelle ein beispielsweise als Diesel-Brennkraftmaschine ausgebildetes Antriebsaggregat 26. Dieses Antriebsaggregat 26 ist beispielsweise über eine Kupplungsanordnung, einen hydrodynamischen Drehmomentwandler oder dergleichen mit einer Getriebeanordnung 28 antriebsmäßig gekoppelt oder koppelbar. Über die Getriebeanordnung 28 kann das vom Antriebsaggregat 26 bereitgestellte Antriebsdrehmoment auf verschiedene Systembereiche übertragen bzw. verteilt werden.

Einer dieser Systembereiche umfasst einen Hydraulik-Fahrkreislauf 30 mit einer in diesen integrierten Hydraulik-Fahrpumpe 32. Diese kann mit der Getriebeanordnung 28 permanent gekoppelt sein oder beispielsweise über eine Kupplungsanordnung an die Getriebeanordnung 28 angekoppelt sein bzw. werden. Bei Antreiben der Hydraulik-Fahrpumpe 32 wälzt diese Fluid, z. B. Hydrauliköl, in dem Hydraulik-Fahrkreislauf 30 um, wodurch ein in Fig. 1 nicht dargestellter Hydraulik-Fahrmotor oder ggf. mehrere Hydraulik-Fahrmotoren angetrieben werden, so dass ein Drehmoment beispielsweise auf die Antriebsräder 16 der Baumaschine 12 übertragen werden kann. Es ist hier darauf hinzuweisen, dass beispielsweise in Zuordnung zu jedem Antriebsrad 16 oder beispielsweise in Zuordnung zu jedem Kettenfahrwerk einer Baumaschine ein eigenständig aufgebauter und arbeitender Hydraulik-Fahrkreislauf vorgesehen sein kann.

Mit 34 ist ein weiterer Hydraulikkreislauf, nämlich ein Hydraulik-Arbeitskreislauf, bezeichnet. Auch dieser umfasst eine Hydraulikpumpe, hier also eine Hydraulik-Arbeitspumpe 36. Auch diese Hydraulik-Arbeitspumpe 36 kann mit der Getriebeanordnung 28 permanent gekoppelt sein oder beispielsweise über eine Kupplungsanordnung an die Getriebeanordnung 28 angekoppelt werden. Im Betrieb der Hydraulik-Arbeitspumpe 36 erzeugt diese eine Fluidumwälzung, z. B. von Hydrauliköl, im Hydraulik-Arbeitskreislauf 34. Auch im Hydraulik-Arbeitskreislauf 34 können ein bzw. mehrere Hydraulik-Arbeitsmotoren vorgesehen sein, durch welche beispielsweise die Unwuchtmassenanordnung in der Verdichterwalze 24 angetrieben werden kann.

Es ist darauf hinzuweisen, dass die Hydraulikpumpen 32, 36 vorteilhafterweise mit variablem Fördervolumen, beispielsweise als Taumelscheibenpumpen, ausgebildet sein können, um auf diese Art und Weise die Fluidumwälzung in den als Hochdruckkreisläufen ausgebildeten Hydraulikkreisläufen 30, 34 und somit das darin auch übertragbare Drehmoment einstellen zu können.

Das Antriebssystem 10 umfasst ferner eine allgemein mit 38 bezeichnete Hydraulik-Antriebsunterstützungseinheit. Diese umfasst eine Hydraulik-Pumpe/Motor-Baugruppe 40, die mit der Getriebeanordnung 28 permanent gekoppelt sein kann oder beispielsweise über eine Kupplungsanordnung an die Getriebeanordnung 28 angekoppelt oder ankoppelbar ist und auf diese Art und Weise mit der Getriebeanordnung 28 und über diese mit dem Antriebsaggregat 26 bzw. den Hydraulikkreisläufen 30, 34, insbesondere deren Hydraulikpumpen 32, 36 antriebsmäßig gekoppelt ist. Die HydraulikPumpe/Motor-Baugruppe 40 ist zwischen einem Betriebszustand, in welchem diese als Pumpe betreibbar ist, und einem Betriebszustand, in welchem diese als Motor betreibbar ist, umschaltbar. Vorteilhafterweise ist auch diese Baugruppe als Taumelscheibenaggregat aufgebaut.

Man erkennt in Fig. 1, dass die Hydraulik-Antriebsunterstützungseinheit 38 und das Antriebsaggregat 26 zueinander parallel über die Getriebeanordnung 28 mit den verschiedenen Hydraulikkreisläufen 30, 34 gekoppelt oder koppelbar sind. Somit ist ein nachfolgend detaillierter beschriebener direkter Drehmomentenaustausch beispielsweise zwischen dem Antriebsaggregat 26 und den Hydraulikkreisläufen 30, 34 und auch ein direkter Drehmomentenaustausch zwischen der Hydraulik-Antriebsunterstützungseinheit 38 und den Hydraulikkreisläufen 30, 34 möglich.

Die Hydraulik-Antriebsunterstützungseinheit 38 umfasst ferner einen Druckfluidspeicher 42, welcher durch den Betrieb der Hydraulik-Pumpe/Motor-Baugruppe 40 als Pumpe geladen werden kann. Dazu kann die HydraulikPumpe/Motor-Baugruppe 40 Fluid, z. B. Hydrauliköl, aus einem vorzugsweise drucklosen Fluidreservoir 44 in Richtung zum Druckfluidspeicher 42 fördern.

In einer von der Hydraulik-Pumpe/Motor-Baugruppe 40 zum Druckfluidspeicher 42 führenden Leitung 46 ist eine Lade/Entlade-Ventileinheit 48 vorgesehen. Diese z. B. durch elektrische Erregung zu verstellende Lade/Entlade-Ventileinheit 48 ist beispielsweise durch eine Vorspannfeder oder dergleichen in den in Fig. 1 dargestellten Grundzustand vorgespannt, in welchem sie die Strömungsverbindung zwischen der Hydraulik-Pumpe/Motor-Baugruppe 40 und dem Druckfluidspeicher 42 unterbricht. Dabei kann die Lade/Entlade-Ventileinheit 48 so ausgebildet sein, dass sie in diesem Zustand als Rückschlagventil wirksam ist, welches zwar einen Fluidstrom von der Hydraulik-Pumpe/Motor-Baugruppe 40 zum Druckfluidspeicher 42 zulässt, jedoch einen Fluidstrom in umgekehrter Richtung unterbindet. Beispielsweise durch elektrische Erregung der Lade/Entlade-Ventileinheit 48 wird diese in ihren Freigabezustand gebracht, in welchem die Strömungsverbindung zwischen dem Druckfluidspeicher 42 und der Hydraulik-Pumpe/Motor-Baugruppe 40 freigegeben ist.

Von dem zwischen dem Druckfluidspeicher 42 und der Lade/Entlade-Ventileinheit 48 liegenden Abschnitt 50 der Leitung 46 zweigt eine zum Fluidreservoir 44 führende Leitung 52 ab. Diese Leitung 52 stellt grundsätzlich eine Verbindung zwischen dem Druckfluidspeicher 42 und dem Fluidreservoir 44 her. In der Leitung 52 sind parallel zueinander drei Ventileinheiten 54, 56, 58 angeordnet. Die Ventileinheit 54 ist eine beispielsweise elektrisch erregbare Entspannungs-Ventileinheit 54, die beispielsweise durch Federvorspannung in einen Grundzustand vorgespannt ist, in welchem sie die Strömungsverbindung zwischen dem Druckfluidspeicher 42 und dem Fluidreservoir 44 freigibt. Bei Aktivierung der Entspannungs-Ventileinheit 54 beispielsweise durch elektrische Erregung wird diese in ihren die Strömungsverbindung zwischen dem Druckfluidspeicher 42 und dem Fluidreservoir 44 unterbrechenden Zustand geschaltet. Dabei kann die Entspannungs-Ventileinheit 54 so ausgebildet sein, dass sie in diesem Zustand als Rückschlagventil wirksam ist, welches eine Fluidströmung vom Fluidreservoir 44 in Richtung zum Druckfluidspeicher 42 grundsätzlich zulässt, eine Fluidströmung in umgekehrter Richtung jedoch unterbindet.

Parallel zur Entspannungs-Ventileinheit 54 ist eine Manuell-Entspannungs-Ventileinheit 56 vorgesehen. Diese kann durch manuelle Betätigung in ihren die Strömungsverbindung zwischen dem Druckfluidspeicher 42 und dem Fluidreservoir 44 freigebenden Zustand gebracht werden.

Parallel zu den Ventileinheiten 54, 56 ist in der Leitung 52 eine Überlast-Ventileinheit 58 vorgesehen, welche dann, wenn der Fluiddruck im Druckfluidspeicher 42 bzw. im Abschnitt 50 der Leitung 48 einen vorbestimmten Grenzdruck übersteigt, eine Entspannung des Druckfluidspeichers 42 zum Fluidreservoir 44 zulässt. Beispielsweise kann vorgesehen sein, dass bei maximaler Beladung im Druckfluidspeicher 42 ein Fluiddruck von etwa 300 bar vorherrschen soll. Bei derartiger Auslegung kann die Überlast-Ventileinheit 58 so dimensioniert sein, dass sie bei einen Druck von 300 bar übersteigendem Druck im Druckfluidspeicher 42 eine Strömungsverbindung zwischen dem Druckfluidspeicher 42 und dem Fluidreservoir 44 herstellt, bis der Fluiddruck im Druckfluidspeicher 42 wieder unter diesen Grenzwert abgefallen ist.

Die Hydraulik-Antriebsunterstützungseinheit 38 umfasst ferner eine Umwälz-Ventileinheit 60. Diese ist im Strömungsweg zwischen der HydraulikPumpe/Motor-Baugruppe 40 und dem Fluidreservoir 44 vorgesehen und zweigt von einem zwischen der Hydraulik-Pumpe/Motor-Baugruppe 40 und der Lade/Entlade-Ventileinheit 48 liegenden Abschnitt 62 der Leitung 46 ab. Die Umwälz-Ventileinheit 60 ist grundsätzlich in einen Zustand vorgespannt, in welchem eine Strömungsverbindung zwischen der Hydraulik-Pumpe/Motor-Baugruppe 40 und dem Fluidreservoir 44 besteht. Durch z. B. elektrische Erregung kann diese Umwälz-Ventileinheit 60 in einen Zustand gebracht werden, in welchem diese Strömungsverbindung unterbrochen ist. In diesem Zustand kann die Umwälz-Ventileinheit 60 als Rückschlagventil wirksam sein, das eine Strömung von der Hydraulik-Pumpe/Motor-Baugruppe 40 zum Fluidreservoir 44 unterbindet, eine Strömung in der anderen Richtung jedoch freigibt.

Die Umwälz-Ventileinheit 60 kann bei in der Sperrstellung positionierter Lade/Entlade-Ventileinheit 48 dann zum Herstellen einer Strömungsverbindung zwischen der Hydraulik-Pumpe/Motor-Baugruppe 40 und dem Fluidreservoir 44 genutzt werden, wenn eine Fluidumwälzung aus dem Fluidreservoir 44 und zurück in das Fluidreservoir 44 stattfinden soll, ohne dabei den Druckfluidspeicher 42 weiter zu laden. Dies kann vorteilhaft sein, um einen minimalen Fluidstrom durch die Hydraulik-Pumpe/Motor-Baugruppe 40 aufrecht zu erhalten, um im Bereich dieser Baugruppe generierte Wärme abzuführen.

Parallel zu der Umwälz-Ventileinheit 60 ist ferner eine Überlast-Ventileinheit 64 angeordnet, welche so dimensioniert sein kann, dass sie bei über dem maximalen Ladedruck liegendem Grenzdruck, beispielsweise bei einem Grenzdruck von etwa 330 bar, eine Strömungsverbindung zum Fluidreservoir 44 freigibt, um einen übermäßigen Druckaufbau insbesondere im Bereich der Leitung 46 zu verhindern.

Ferner ist parallel zur Umwälz-Ventileinheit 60 und zur Überlast-Ventileinheit 64 ein Rückschlagventil 66 vorgesehen. Dieses ist so geschaltet, dass es eine Strömung von dem Fluidreservoir 44 in die Leitung 46, insbesondere den Abschnitt 62 derselben, zulässt, eine Strömung in der anderen Richtung jedoch unterbindet, um auf diese Art und Weise das Entstehen eines Unterdrucks im Bereich der Leitung 46 zu verhindern.

In Zuordnung zu allen entweder durch elektrische Erregung oder durch manuelle Betätigung zu verstellenden und einen Strömungsweg zum Fluidreservoir 44 freigebenden Ventileinheiten, also der Enispannungs-Ventileinheit 54, der Manuell-Entspannungs-Ventileinheit 56 und der Umwälz-Ventileinheit 60, sind Strömungsdrosselanordnungen 68, 70, 72 vorgesehen, welche insbesondere beim Bestehen sehr großer Druckdifferenzen zwischen dem Druckfluidspeicher 42 und dem Fluidreservoir 44 eine Drosselung des Fluidstroms zum Fluidreservoir 44 bewirken.

Bei dem vorangehend beschriebenen Antriebssystem 10 besteht zwischen der Hydraulik-Antriebsunterstützungseinheit 38 und den für den Betrieb der Baumaschine 10 erforderlichen Hydraulikkreisläufen 30, 34 keine Fluidaustauschverbindung. Die Hydraulik-Antriebsunterstützungseinheit 38 ist mit den Hydraulikkreisläufen 30, 34 ausschließlich antriebsmäßig, also mechanisch gekoppelt, nämlich über die Getriebeanordnung 28. Dies gestattet es, die Hydraulik-Antriebsunterstützungseinheit 38 als offenen Kreislauf, also als Niederdruckkreislauf auszugestalten, während die Hydraulikkreisläufe 30, 34 als geschlossene Hydraulikkreisläufe, also als Hochdruckkreisläufe, ausgebildet sein können.

Das in Fig. 1 dargestellte Antriebssystem 10 kann in verschiedenen Betriebsmodi arbeiten. Die Fig. 1 zeigt einen Zustand, bei welchem die Hydraulik-Antriebsunterstützungseinheit 38 in einen nachfolgend beschriebenen Umwälzbetriebszustand geschaltet ist. Dabei ist der Druckfluidspeicher 42 nicht in Verbindung mit dem Fluidreservoir 44, so dass ein darin ggf. aufgebauter Druck im Wesentlichen beibehalten bleibt.

Soll das Antriebssystem 10 betrieben werden, beispielsweise um den in Fig. 2 dargestellten Bodenverdichter voranzubewegen und dabei auch unter Ausnutzung von Vibrations- oder/und Oszillationsbewegungen der Verdichterwalze 24 den Untergrund 18 zu verdichten, wird die Lade/Entlade-Ventileinheit 48 erregt, so dass sie in ihren eine Verbindung zwischen dem Druckfluidreservoir 42 und der Hydraulik-Pumpe/Motor-Baugruppe 40 herstellenden Zustand ist. Gleichzeitig werden auch die Entspannungs-Ventileinheit 54 und die Umwälz-Ventileinheit 60 angesteuert bzw. erregt, um sie in ihren Sperrzustand zu bringen. Das Antriebsaggregat 26 kann in diesem Zustand über die Getriebeanordnung 28 die beiden Hydraulikpumpen 32, 36 für den Fahrantrieb und den Antrieb der Unwuchtmassenanordnung antreiben. Ferner wird die Hydraulik-Pumpe/Motor-Baugruppe 40 angetrieben, so dass diese als Pumpe arbeitend Fluid aus dem Fluidreservoir 44 in den Druckfluidspeicher 42 fördert. Dieser Zustand kann so lange beibehalten werden, bis der Druckfluidspeicher 42 eine Schwellenbeladung erreicht hat, die beispielsweise bei 85 % der maximalen Beladung liegen kann. Bei einem maximalen Ladedruck von etwa 300 bar kann diese Schwellenbeladung also einem Ladedruck von etwa 255 bar entsprechen.

Ist dieser Zustand erreicht, kann die Hydraulik-Pumpe/Motor-Baugruppe 44 weiterhin im Pumpenbetrieb, wenngleich mit geminderter Förderleistung weiterbetrieben werden, um etwaige Leckageverluste aus dem Druckfluidspeicher 42 über die diesen insbesondere in Richtung zum Fluidreservoir 44 hin absperrenden Ventileinheiten zu kompensieren und dafür zu sorgen, dass ein Druck aufrecht erhalten bleibt, der in etwa der Schwellenbeladung entspricht.

Wird im Betrieb der Baumaschine 12 Energie frei, beispielsweise weil diese verzögert werden soll oder der Betrieb der Unwuchtmassenanordnung eingestellt werden soll, so findet in den Hydraulikkreisläufen 30, 34 eine Umkehr der Drehmomentenübertragungsrichtung statt, so dass vorübergehend die Hydraulikpumpen 32, 36, angetrieben durch einen durch die jeweiligen nicht dargestellten Hydraulikmotoren generierten Fluidstrom, als Motoren wirksam sind und ein Drehmoment in die Getriebeanordnung 28 einleiten. Dieses Drehmoment kann über die Getriebeanordnung 28 in die HydraulikPumpe/Motor-Baugruppe 40 eingeleitet werden, welche dann wieder als Pumpe genutzt werden kann, um den Druck im Druckfluidspeicher 42 weiter zu erhöhen, beispielsweise bis der maximale Ladedruck erreicht ist. Dazu wird die Hydraulik-Pumpe/Motor-Baugruppe 40 in einen Zustand mit erhöhter Förderleistung gestellt, so dass der erforderliche bzw. gewünschte Druckaufbau im Druckfluidspeicher 42 erreicht wird. Dieser Vorgang kann so lange fortgesetzt bzw. so oft wiederholt werden, bis die maximale Beladung des Druckfluidspeichers 42, also der maximale Ladedruck von beispielsweise 300 bar, erreicht ist. Ist dies der Fall, kann die Hydraulik-Pumpe/Motor-Baugruppe 40 wieder in einen Zustand mit geringerer Förderleistung bzw. Förderrate verstellt werden, um dafür zu sorgen, dass im Druckfluidspeicher 42 der unter Ausnutzung wenigstens eines Energierückgewinnungsvorgangs auf den maximalen Ladedruck erhöhte Druck aufrecht erhalten bleibt.

Es ist darauf hinzuweisen, dass dieser Energierückgewinnungsbetrieb zum weiteren Beladen des Druckfluidspeichers 42 auch dann genutzt werden kann, wenn nur aus einem der beiden Hydraulikkreisläufe 30, 34 die Rückgewinnung von Energie möglich ist. Ferner kann auch in diesem Zustand das Antriebsaggregat 26 noch genutzt werden, um ein zusätzliches Drehmoment in die Getriebeanordnung 28 einzuleiten, insbesondere wenn in einen Energierückgewinnungsbetrieb übergegangen werden kann, gleichzeitig der Druckfluidspeicher 42 jedoch noch nicht den Zustand der Schwellenbeladung von beispielsweise etwa 85 % der maximalen Beladung erreicht hat.

Insbesondere im Energierückgewinnungsbetrieb ist es besonders vorteilhaft, dass über die Getriebeanordnung 28 eine direkte Verbindung zwischen den Hydraulikkreisläufen 30, 34 und der Hydraulik-Antriebsunterstützungseinheit 38 besteht, so dass die im Energierückgewinnungsbetrieb freigesetzte Energie ohne beispielsweise über das Antriebsaggregat 26 geleitet zu werden in Richtung zur Hydraulik-Antriebsunterstützungseinheit 38 geleitet werden kann.

Besteht im Bereich von einem oder beiden Hydraulikkreisläufen 30, 34 eine hohe Drehmomentenanforderung, beispielsweise weil kurzzeitig die Baumaschine 12 eine vergleichsweise hohe Steigung überwinden soll oder über eine Randsteinkante oder ein sonstiges Hindernis hinweg bewegt werden soll, kann die im Druckfluidspeicher 42 gespeicherte Energie genutzt werden, um bei Betreiben der Hydraulik-Pumpe/Motor-Baugruppe 40 als Motor ein Antriebsunterstützungsdrehmoment in die Getriebeanordnung 28 einzuleiten und dieses über die Getriebeanordnung 28 zu einem oder beiden Hydraulikkreisläufen 30, 40 zu leiten, also zum unterstützenden Antreiben der jeweiligen Hydraulikpumpe 32 bzw. 36 zu nutzen. In diesem Zustand kann beispielsweise auch das Antriebsaggregat 26 so betrieben werden, dass es das durch dieses maximal bereitstellbare Antriebsdrehmoment liefern kann, so dass ein Gesamtantriebsdrehmoment über die Getriebeanordnung 28 zu den Hydraulikkreisläufen 30, 34 geleitet wird, welches sich aus dem Antriebsdrehmoment des Antriebsaggregats 26, beispielsweise dem maximalen Antriebsdrehmoment desselben, und dem Antriebsunterstützungsdrehmoment der Hydraulik-Antriebsunterstützungseinheit 38 zusammensetzt. Um diesen Zustand zu erreichen, ist die Lade/Entlade-Ventileinheit 48 in ihren Freigabezustand geschaltet, so dass der Druckfluidspeicher 42 sich über die Hydraulik-Pumpe/Motor-Baugruppe 40 in Richtung zum Fluidreservoir 44 entleeren kann. Das in diesem Antriebsunterstützungsbetriebszustand durch die Hydraulik-Antriebsunterstützungseinheit 38 bereitstellbare Drehmoment kann durch entsprechende Verstellung der Hydraulik-Pumpe/Motor-Baugruppe 40 im Motorbetrieb variiert werden.

Ein Zustand, in welchem die Hydraulik-Pumpe/Motor-Baugruppe 40 in einem Umwälzbetriebszustand betrieben werden kann, kann dann auftreten, wenn beispielsweise durch das Bewegen eines Fahrhebels in eine Neutralposition die Drehzahl des Antriebsaggregats 26 unter eine Schwellendrehzahl abfällt, die im normalen Arbeitsbetrieb zum Bereitstellen eines ausreichenden Antriebsdrehmoments nicht unterschritten wird oder unterschritten werden sollte. Beispielsweise kann eine derartige Schwellendrehzahl im Bereich von 1000 bis 1200 Umdrehungen pro Minute, vorteilhafterweise bei etwa 1100 Umdrehungen pro Minute liegen. In einem derartigen Zustand kann das Antriebsaggregat beispielsweise in einen Leerlaufzustand übergehen, bei welchem dieses mit einer Drehzahl z. B. im Bereich von 950 Umdrehunge pro Minute dreht. Da in diesem Zustand davon auszugehen ist, dass das Antriebssystem 10 nicht zum Bereitstellen der im Arbeitsbetrieb bzw. im Fahrbetrieb allgemein erforderlichen, vergleichsweise hohen Drehmomente genutzt werden soll, kann auch auf das fortgesetzte Beladen des Druckfluidspeichers 42 zum Beibehalten eines vergleichsweise hohen Speicherdrucks verzichtet werden. Beispielsweise kann vorgesehen sein, dass dann, wenn der Ladezustand des Druckfluidspeichers über einer Schwellenbeladung, beispielsweise im Bereich von 60 bis 80 %, vorzugsweise etwa 70 %, einer maximalen Beladung liegt, das fortgesetzte Betreiben der HydraulikPumpe/Motor-Baugruppe 40 zum Aufrechterhalten des sehr hohen Fluiddrucks im Druckfluidspeicher 42 eingestellt wird und in einen Zustand übergegangen wird, in welchem die dann immer noch durch das Antriebsaggregat 26 angetriebene Hydraulik-Pumpe/Motor-Baugruppe 40 lediglich zum Umwälzen des Fluids aus dem Fluidreservoir 44 und zurück in das Fluidreservoir 44 betrieben wird. Ist beispielsweise, wie vorangehend dargelegt, vorgesehen, dass im Druckfluidspeicher 42 eine maximale Beladung dann vorliegt, wenn der darin vorherrschende Druck bei etwa 300 bar liegt, so kann die Schwellenbeladung bzw. der in Zuordnung dazu vorgesehene Druck im Druckfluidspeicher 42 zum Übergehen in den Umwälzbetriebszustand bei etwa 210 bar liegen. Es wird also ein in Fig. 1 mit Pfeilen eingezeichneter Strömungskreislauf eingerichtet, bei welchem die geförderte Fluidmenge ausreicht, um die im Bereich der Hydraulik-Pumpe/Motor-Baugruppe 40 generierte Wärme abzuführen, jedoch gleichzeitig nur eine vergleichsweise geringe Belastung des Antriebsaggregats 26 zum Bereitstellen eines derartigen Antriebsdrehmoments für die Hydraulik-Pumpe/Motor-Baugruppe 40 vorliegt. Dies verringert die Belastung des Antriebsaggregats 26 und somit dessen Kraftstoffverbrauch. In diesem Umwälzbetriebszustand sind die Lade/Entlade-Ventileinheit 48 und auch die Entspannungs-Ventileinheit 54, ebenso wie die Manuell-Entspannungs-Ventileinheit 56 jeweils in ihrem Sperrzustand, um den Beladungszustand des Druckfluidspeichers 42 beizubehalten. Das durch die Hydraulik-Pumpe/Motor-Baugruppe 40 aus dem Fluidreservoir 44 entnommene Fluid kann über die in ihren Freigabezustand geschaltete Umwälz-Ventileinheit 60 wieder in das Fluidreservoir 44 zurückgefördert werden.

Ist das Antriebssystem 10 in seinem Umwälzbetriebszustand und wird beispielsweise durch die Betätigung eines Fahrhebels oder die Aktivierung eines Hydraulik-Arbeitskreislaufs 34 wieder ein höheres Antriebsdrehmoment vom Antriebsaggregat 26 gefordert, allgemein also wieder in einen Zustand übergegangen, in welchem das Antriebssystem 10 zur Bereitstellung vergleichsweise großer Drehmomente zu betreiben ist, kann der Umwälzbetriebszustand dadurch beendet werden, die Umwälz-Ventileinheit 60 beispielsweise durch elektrische Erregung wieder in ihren Sperrzustand geschaltet wird und die Lade/Entlade-Ventileinheit 48 in ihren Freigabezustand geschaltet wird, um die Hydraulik-Pumpe/Motor-Baugruppe 40 wieder als Pumpe zum Beladen bzw. weiteren Beladen des Druckfluidspeichers 42 betreiben zu können.

Das Übergehen in den Umwälzbetriebszustand in einer Phase, in welcher eine größere Drehmomentenanforderung nicht zu erwarten ist, ermöglicht also das Absenken der ohnehin vorhandenen Bereitstellungsverluste durch die Minderung der Drehmomentenanforderung seitens der HydraulikPumpe/Motor-Baugruppe 40, wozu lediglich die Umwälz-Ventilanordnung 60 in den Zustand zu schalten ist, welcher in Fig. 1 dargestellt ist, also beispielsweise einen Zustand, in welchen sie ohnehin vorgespannt ist, und die Hydraulik-Pumpe/Motor-Baugruppe 40 als Pumpe mit vergleichsweise geringer Förderleistung zu betreiben ist. Ist eine der Bedingungen Schwellendrehzahl unterschritten und Schwellendruck überschritten nicht erfüllt, liegt insbesondere die Beladung des Druckfluidspeichers 42 unter der für den Übergang in den Umwälzbetriebszustand vorgesehenen Schwellenbeladung, so kann die Hydraulik-Pumpe/Motor-Baugruppe 40 auch dann zum weiteren Beladen des Druckfluidspeichers 42 betrieben werden, wenn die Drehzahl des Antriebsaggregats unter die in Zuordnung zum Umwälzbetriebszustand vorgesehene Schwellendrehzahl abfällt.

Die Ausgestaltung des Antriebssystems 10 ermöglicht es, das Antriebsaggregat 26 so hinsichtlich des durch dieses maximal bereitstellbaren Antriebsdrehmoments auszulegen, dass dieses maximale Antriebsdrehmoment kleiner ist, als ein im Betrieb der Baumaschine 12 maximal auftretendes Anforderungsdrehmoment. Da in Zuständen, in welchen eine derartige Drehmomentenanforderung vorliegt, die Hydraulik-Antriebsunterstützungseinheit 38 das Antriebsunterstützungsdrehmoment bereitstellen kann, ist es möglich, ein Gesamtantriebsdrehmoment in die Hydraulikkreisläufe 30, 34 einzuleiten, welches dem angeforderten Drehmoment entspricht, um somit die Baumaschine 12 in geeigneter Weise betreiben zu können.

Durch diese Auslegung des Antriebsaggregats 26 mit vergleichsweise niedrigem maximalem Antriebsdrehmoment wird bei allgemein geringer Baugröße eine effiziente Energieausnutzung gewähleistet, bei welcher insbesondere auch die in verschiedenen Zuständen der Baumaschine 12 frei werdende Energie genutzt werden kann, um den Druckfluidspeicher 42 zu laden.

Es sei darauf hingewiesen, dass das in Fig. 1 dargestellte Antriebssystem insbesondere hinsichtlich der Ausgestaltung der Hydraulik-Antriebsunterstützungseinheit in verschiedenster Weise variiert werden kann. So könnten selbstverständlich mehrere beispielsweise parallel geschaltete Druckfluidspeicher vorgesehen sein. Auch können die verschiedenen Ventile bzw. Ventileinheiten jeweils als separat aufgebaute und durch Leitungen miteinander verbundene Baugruppen vorgesehen sein oder können in einen Ventilblock integriert sein, was zu einer kompakten, gleichwohl jedoch mit hoher Betriebssicherheit arbeitenden Ausgetaltung beiträgt.

Ferner können beispielsweise die verschiedenen Hydraulikpumpen ebenso wie die Hydraulik-Pumpe/Motor-Baugruppe mit der Getriebeanordnung 28 permanent, also nicht über den Drehmomentenfluss unterbrechende Kupplungsanordnungen oder dergleichen gekoppelt sein. Durch die Verstellung dieser beispielsweise als Taumelscheibenaggregate ausgebildeten Pumpen bzw. Baugruppen kann dann die Drehmomentenanforderung bzw. Fluidförderrate bzw. -leistung variiert werden. Soll ein jeweiliger Hydraulikkreislauf bzw. die Hydraulik-Antriebsunterstützungseinheit nicht betrieben werden, so können die Hydraulikpumpen bzw. die Hydraulik-Pumpe/Motor-Baugruppe in einen Neutralzustand geschaltet werden.

Das vorangehend detailliert beschriebene Prinzip des Bereitstellens eines Umwälzbetriebszustands kann in besonders vorteilhafter Weise kombiniert werden mit dem Ausgestaltungsprinzip, gemäß welchem ein durch das Antriebsaggregat bereitstellbares maximales Antriebsdrehmoment kleiner ist, als ein zum Betreiben wenigstens eines Hydraulikkreislaufs aufzubringendes maximales Anforderungsdrehmoment. Da diese Auslegung im Allgemeinen zum Einsatz kleinerer Antriebsaggregate, also kleinerer Diesel-Brennkraftmaschinen führt, ist die Entlastung derselben insbesondere beim Bereitstellen des Umwälzbetriebszustands besonders vorteilhaft.

## Patentansprüche

1. Antriebssystem, insbesondere für eine selbstfahrende Baumaschine, insbesondere Bodenverdichter, umfassend:
- ein Antriebsaggregat (26),
- wenigstens einen Hydraulikkreislauf (30, 34) mit einer durch das Antriebsaggregat (26) antreibbaren Hydraulikpumpe (32, 36),
- eine Hydraulik-Antriebsunterstützungseinheit (38) mit einer Hydraulik-Pumpe/Motor-Baugruppe (40) und wenigstens einem Druckfluidspeicher (42), wobei die Hydraulik-Pumpe/Motor-Baugruppe (40) mit dem Antriebsaggregat (26) oder/und wenigstens einem Hydraulikkreislauf (30, 34) antriebsmäßig gekoppelt oder koppelbar ist, wobei die Hydraulik-Pumpe/Motor-Baugruppe (40) in einem Ladebetriebszustand durch das Antriebsaggregat (26) oder/und wenigstens einen Hydraulikkreislauf (30, 34) als Pumpe zum Beladen wenigstens eines Druckfluidspeichers (42) betreibbar ist und in einem Antriebsunterstützungsbetriebszustand als Motor zur Bereitstellung eines Antriebsunterstützungsdrehmomentes für die Hydraulikpumpe (32, 36) wenigstens eines Hydraulikkreislaufs (30, 34) betreibbar ist, wobei
die Hydraulik-Pumpe/Motor-Baugruppe (40) in einem Umwälzbetriebszustand als Pumpe zum Fördern von Fluid aus einem Fluidreservoir (44) und in ein Fluidreservoir (44) betreibbar ist,
**dadurch gekennzeichnet, dass** die Hydraulik-Pumpe/Motor-Baugruppe (40) dann zum Bereitstellen des Umwälzbetriebszustands betrieben wird, wenn ein Ladezustand wenigstens eines Druckfluidspeichers (42) über einer Schwellenbeladung ist und eine Antriebsdrehzahl des Antriebsaggregats (26) unter einer Schwellendrehzahl ist.

2. Antriebssystem nach Anspruch 1,
**dadurch gekennzeichnet, dass** die Hydraulik-Pumpe/Motor-Baugruppe (40) im Umwälzbetriebszustand durch das Antriebsaggregat (26) angetrieben wird.

3. Antriebssystem nach Anspruch 1 oder 2,
**dadurch gekennzeichnet, dass** die Schwellenbeladung ein Ladezustand mit einer Beladung im Bereich von 60 bis 80 %, vorzugsweise etwa 70 %, einer maximalen Beladung des wenigstens einen Druckspeichers (72) ist oder/und dass die Schwellendrehzahl eine Drehzahl im Bereich von 1000 bis 1200 Umdrehungen pro Minute, vorzugsweise etwa 1100 Umdrehungen pro Minute ist.

4. Antriebssystem nach einem der Ansprüche 1 bis 3,
**dadurch gekennzeichnet, dass** die Hydraulik-Antriebsunterstützungseinheit (38) eine Lade/Entlade-Ventileinheit (48) zum wahlweisen Freigeben/Unterbrechen einer Strömungsverbindung zwischen der HydraulikPumpe/Motor-Baugruppe (40) und wenigstens einem Druckfluidspeicher (42) wenigstens in Strömungsrichtung vom Druckfluidspeicher (42) zur Hydraulik-Pumpe/Motor-Baugruppe (40) umfasst und eine Entspannungs-Ventileinheit (54) zum wahlweisen Freigeben/Unterbrechen einer Strömungsverbindung zwischen wenigstens einem Druckfluidspeicher (42) und einem Fluidreservoir (44) wenigstens in Strömungsrichtung vom Druckfluidspeicher (42) zum Fluidreservoir umfasst.

5. Antriebssystem nach Anspruch 4,
**dadurch gekennzeichnet, dass** die Lade/Entlade-Ventileinheit (48) in einen die Strömungsverbindung unterbrechenden Grundzustand vorgespannt ist oder/und dass die Entspannungs-Ventileinheit (54) in einen die Strömungsverbindung freigebenden Grundzustand vorgespannt ist.

6. Antriebssystem nach einem der Ansprüche 1 bis 5,
**dadurch gekennzeichnet, dass** die Hydraulik-Antriebsunterstützungseinheit (38) eine Umwälz-Ventileinheit (60) im Strömungsweg zwischen der Hydraulik-Pumpe/Motor-Baugruppe (40) und einem Fluidreservoir (44) umfasst zum wahlweisen Freigeben/Unterbrechen einer Strömungsverbindung zwischen der Hydraulik-Pumpe/Motor-Baugruppe (40) und dem Fluidreservoir (44) wenigstens in Strömungsrichtung von der HydraulikPumpe/Motor-Baugruppe (40) zum Fluidreservoir (44).

7. Antriebssystem nach Anspruch 6,
**dadurch gekennzeichnet, dass** im Strömungsweg zwischen der Hydraulik-Pumpe/Motor-Baugruppe (40) und einem Fluidreservoir (44), vorzugsweise im Strömungsweg zwischen der Hydraulik-Pumpe/Motor-Baugruppe (40) und der Umwälz-Ventileinheit (60), eine Strömungsdrosselanordnung (72) vorgesehen ist.

8. Antriebssystem nach Anspruch 6 oder 7,
**dadurch gekennzeichnet, dass** die Umwälz-Ventileinheit (60) in einen die Strömungsverbindung zwischen der Hydraulik-Pumpe/Motor-Baugruppe (40) und einem Fluidreservoir (44) freigebenden Grundzustand vorgespannt ist.

9. Antriebssystem nach einem der Ansprüche 1 bis 8,
**dadurch gekennzeichnet, dass** die Hydraulik-Antriebsunterstützungseinheit (38) einen offenen Kreislauf umfasst.

10. Antriebssystem nach einem der Ansprüche 1 bis 9,
**dadurch gekennzeichnet, dass** zwischen wenigstens einem Fluidkreislauf (30, 34), vorzugsweise jedem Fluidkreislauf (30, 34), und der Hydraulik-Antriebsunterstützungseinheit (38) keine Fluidaustauschverbindung besteht.

11. Antriebssystem nach einem der Ansprüche 1 bis 10,
**dadurch gekennzeichnet, dass** das Antriebsaggregat (26) eine Diesel-Brennkraftmaschine umfasst.

12. Selbstfahrende Baumaschine, insbesondere Bodenverdichter, umfassend ein Antriebssysstem (10) nach einem der vorhergehenden Ansprüche.

13. Verfahren zum Betreiben eines Antriebssystem, insbesondere für eine selbstfahrende Baumaschine, insbesondere Bodenverdichter, das Antriebssystem umfassend:
- ein Antriebsaggregat (26),
- wenigstens einen Hydraulikkreislauf (30, 34) mit einer durch das Antriebsaggregat (26) antreibbaren Hydraulikpumpe (32, 36),
- eine Hydraulik-Antriebsunterstützungseinheit (38) mit einer Hydraulik-Pumpe/Motor-Baugruppe (40) und wenigstens einem Druckfluidspeicher (42), wobei die Hydraulik-Pumpe/Motor-Baugruppe (40) mit dem Antriebsaggregat (26) oder/und wenigstens einem Hydraulikkreislauf (30, 34) antriebsmäßig gekoppelt oder koppelbar ist, wobei die Hydraulik-Pumpe/Motor-Baugruppe (40) in einem Ladebetriebszustand durch das Antriebsaggregat (26) oder/und wenigstens einen Hydraulikkreislauf (30, 34) als Pumpe zum Beladen wenigstens eines Druckfluidspeichers (42) betreibbar ist und in einem Antriebsunterstützungsbetriebszustand als Motor zur Bereitstellung eines Antriebsunterstützungsdrehmomentes für die Hydraulikpumpe (32, 36) wenigstens eines Hydraulikkreislaufs (30, 34) betreibbar ist,
bei welchem Verfahren die Hydraulik-Pumpe/Motor-Baugruppe (40) in einem Umwälzbetriebszustand als Pumpe zum Fördern von Fluid aus einem Fluidreservoir (44) und in ein Fluidreservoir (44) betrieben wird, wenn ein Ladezustand wenigstens eines Druckfluidspeichers (42) über einer vorbestimmten Schwellenbeladung ist und eine Antriebsdrehzahl des Antriebsaggregats (26) unter einer vorbestimmten Schwellendrehzahl ist.

14. Verfahren nach Anspruch 13,
**dadurch gekennzeichnet, dass** die Hydraulik-Pumpe/Motor-Baugruppe (40) eine vorbestimmte Zeitdauer nach Unterschreiten der Schwellendrehzahl zum Bereitstellen des Umwälzbetriebszustands betrieben wird, wenn der Ladezustand wenigstens eines Druckspeichers (42) über der vorbestimmten Schwellenbeladung ist.

## Claims

1. A drive system, in particular for a self-propelled construction machine, in particular a soil compactor, comprising:
- a drive unit (26),
- at least one hydraulic circuit (30, 34) with a hydraulic pump (32, 36) driven by the drive unit (26),
- a hydraulic drive support unit (38) with a hydraulic pump/motor assembly (40) and at least one pressure fluid reservoir (42), wherein the hydraulic pump/motor assembly (40) is, or can be, drivingly coupled with the drive unit (26) and/or at least one hydraulic circuit (30, 34), wherein the hydraulic pump/motor assembly (40) can be driven in a charge operating mode by the drive unit (26) and/or at least one hydraulic circuit (30, 34) as a pump to charge at least one pressure fluid reservoir (42) and can be operated in a drive support operating mode as a motor to provide a drive support torque for the hydraulic pump (32, 36) of at least one hydraulic circuit (30,34), wherein
the hydraulic pump/motor assembly (40) can be operated in a recirculation operating mode as a pump to convey fluid out of a fluid reservoir (44) and into a fluid reservoir (44),
**characterized in that**, the hydraulic pump/motor assembly (40) is operated to provide the recirculation operating mode when a charging mode of at least one pressure fluid reservoir (42) is above a threshold charge and a drive speed of the drive unit (26) is below a threshold speed.

2. The drive system according to claim 1,
**characterized in that** the hydraulic pump/motor assembly (40) is driven in a recirculation operating mode by the drive unit (26).

3. The drive system according to claim 1 or 2,
**characterized in that** the threshold charge is a charging mode with a charge in the range of 60 to 80%, preferably about 70%, of a maximum charge of the at least one pressure reservoir (72), and/or that the threshold speed is a speed in the range of 1000 to 1200 revolutions per minute, preferentially about 1100 revolutions per minute.

4. The drive system according to any one of claims 1 to 3,
**characterized in that** the hydraulic drive support unit (38) comprises a charge/discharge valve unit (48) for the selective release/interruption of a flow connection between the hydraulic pump/motor assembly (40) and at least one pressure fluid reservoir (42) at least in the flow direction from the pressure fluid reservoir (42) to the hydraulic pump/motor assembly (40) and comprises an expansion valve unit (54) to selectively release/interrupt a flow connection between at least one pressure fluid reservoir (42) and a fluid reservoir (44) at least in the flow direction from the pressure fluid reservoir (42) to the fluid reservoir.

5. The drive system according to claim 4,
**characterized in that** the charge/discharge valve unit (48) is pre-tensioned to a basic state interrupting the flow connection, and/or that the expansion valve unit (54) is pre-tensioned to a basic state releasing the flow connection.

6. The drive system according to any one of claims 1 to 5,
**characterized in that** the hydraulic drive support unit (38) comprises a recirculation valve unit (60) in the flow path between the hydraulic pump/motor assembly (40) and a fluid reservoir (44) to selectively release/interrupt a flow connection between the hydraulic pump/motor assembly (40) and the fluid reservoir (44) at least in the flow direction from the hydraulic pump/motor assembly (40) to the fluid reservoir (44).

7. The drive system according to claim 6, **characterized in that** a flow restriction arrangement (72) is provided in the flow path between the hydraulic pump/motor assembly (40) and a fluid reservoir (44), preferably in the flow path between the hydraulic pump/motor assembly (40) and the recirculation valve unit (60).

8. The drive system according to claim 6 or 7,
**characterized in that** the recirculation valve unit (60) is pre-tensioned to a basic state releasing the flow connection between the hydraulic pump/motor assembly (40) and a fluid reservoir (44).

9. The drive system according to any one of claims 1 to 8,
**characterized in that** the hydraulic drive support unit (38) comprises an open circuit.

10. The drive system according to any one of claims 1 to 9,
**characterized in that** there is no fluid exchange connection between at least one fluid circuit (30, 34), preferably each fluid circuit (30, 34), and the hydraulic drive support unit (38).

11. The drive system according to any one of claims 1 to 10,
**characterized in that** the drive unit (26) comprises a diesel combustion engine.

12. The self-propelled construction machine, in particular a soil compactor, comprising a drive system (10) according to one of the preceding claims.

13. A procedure to operate a drive system, in particular for a self-propelled construction machine, in particular a soil compactor, the drive system comprising:
- a drive unit (26),
- at least one hydraulic circuit (30, 34) with a hydraulic pump (32, 36) which can be driven by the drive unit (26),
- a hydraulic-drive support unit (38) with a hydraulic pump/motor assembly (40) and at least one pressure fluid reservoir (42), wherein the hydraulic pump/motor assembly (40) is, or can be, drivingly coupled with the drive unit (26) and/or at least one hydraulic circuit (30, 34), wherein the hydraulic pump/motor assembly (40) can be operated in a charging operating mode by the drive unit (26) and/or at least one hydraulic circuit (30, 34) as a pump to charge at least one pressure fluid reservoir (42) and be operated in a drive support operating mode as a motor to provide a drive support torque for the hydraulic pump (32, 36) of at least one hydraulic circuit (30,34),
in which procedure the hydraulic pump/motor assembly (40) can be operated in a recirculation operating mode as a pump to convey fluid out of a fluid reservoir (44) and into a fluid reservoir (44) when a charge state of at least one pressure fluid reservoir (42) is above a predetermined threshold charge and a speed of the drive unit (26) is below a predetermined threshold speed.

14. The procedure according to claim 13,
**characterized in that** the hydraulic pump/motor assembly (40) is operated for a predetermined time after falling below the threshold speed to provide the recirculation operating mode when the charge state of at least one pressure reservoir (42) is above a predetermined threshold charge.

## Revendications

1. Un système d'entraînement, en particulier pour une machine de construction autotractée, en particulier un compacteur de sol, comprenant:
- une unité d'entraînement (26),
- au moins un circuit hydraulique (30, 34) avec une pompe hydraulique (32, 36) qui peut être entraînée par l'unité d'entraînement (26),
- une unité de support d'entraînement hydraulique (38) avec un module pompe hydraulique/moteur (40) et au moins un réservoir de fluide sous pression (42), où le module pompe hydraulique/moteur (40) est ou peut être accouplé pour un entraînement avec l'unité d'entraînement (26) ou/et au moins un circuit hydraulique (30, 34), où le module pompe hydraulique/moteur (40) peut être entrainé dans un état de mode de chargement par l'unité d'entraînement (26) ou/et au moins un circuit hydraulique (30, 34) peut être opéré comme une pompe pour charger au moins un réservoir de fluide sous pression (42) et peut être opéré dans un état opératoire de support d'entraînement comme un moteur pour prévoir un couple de support d'entraînement pour la pompe hydraulique (32, 36) d'au moins un circuit hydraulique (30, 34), où
le module pompe hydraulique/moteur (40) peut être opéré dans un état opératoire de recirculation comme une pompe pour transporter du fluide hors d'un réservoir de fluide (44) et dans un réservoir de fluide (44),
**caractérisé en ce que** le module pompe hydraulique/moteur (40) est opéré pour prévoir l'état opératoire de recirculation quand un état de chargement d'au moins un réservoir de fluide sous pression (42) est au-dessus un chargement seuil et quand une vitesse d'entraînement de l'unité d'entraînement (26) est au-dessous d'une vitesse seuil.

2. Le système d'entraînement selon la revendication 1,
**caractérisé en ce que** le module pompe hydraulique/moteur (40) est entraîné dans l'état opératoire de recirculation par l'unité d'entraînement (26).

3. Le système d'entraînement selon les revendications 1 ou 2,
**caractérisé en ce que** le chargement seuil est un état de chargement avec un chargement dans la gamme comprise entre 60 et 80%, de préférence d'environ 70% d'un chargement maximal dudit au moins un réservoir sous pression (72) ou/et **en ce que** la vitesse seuil est une vitesse dans la gamme comprise entre 1000 et 1200 tours par minute, de préférence d'environ 1100 tours par minute.

4. Le système d'entraînement selon une des revendications 1 à 3,
**caractérisé en ce que** l'unité de support d'entraînement hydraulique (38) comprend une unité de valve de chargement/déchargement (48) pour sélectivement libérer/interrompre une connexion fluidique entre le module pompe hydraulique/moteur (40) et au moins un réservoir de fluide sous pression (42) au moins dans le sens de circulation du réservoir de fluide sous pression (42) au module pompe hydraulique/moteur (40) et comprend une unité de valve de détente (54) pour sélectivement libérer/interrompre une connexion fluidique entre au moins un réservoir de fluide sous pression (42) et un réservoir de fluide (44) au moins dans le sens de circulation du réservoir de fluide sous pression (42) au réservoir de fluide.

5. Le système d'entraînement selon la revendication 4,
**caractérisé en ce que** l'unité de valve de chargement/déchargement (48) est précontrainte dans un état de base interrompant la connexion fluidique ou/et que l'unité de valve de détente (54) est précontrainte dans un état de base libérant la connexion fluidique.

6. Le système d'entraînement selon une des revendications 1 à 5,
**caractérisé en ce que** l'unité de support d'entraînement hydraulique (38) comprend une valve de circulation (60) dans la voie de circulation entre le module pompe hydraulique/moteur (40) et un réservoir de fluide (44) pour sélectivement libérer/interrompre une connexion fluidique entre le module pompe hydraulique/moteur (40) et le réservoir de fluide (44) au moins dans le sens de circulation du module pompe hydraulique/moteur (40) au réservoir de fluide (44).

7. Le système d'entraînement selon la revendication 6,
**caractérisé en ce qu'**un arrangement d'étranglement de circulation (72) est prévu dans la voie de circulation entre le module pompe hydraulique/moteur (40) et un réservoir de fluide (44), de préférence dans la voie de circulation entre le module pompe hydraulique/moteur (40) et l'unité de valve de circulation (60).

8. Le système d'entraînement selon la revendication 6 ou 7,
**caractérisé en ce que** l'unité de valve de circulation (60) est précontrainte dans un état de base libérant la connexion fluidique entre le module pompe hydraulique/moteur (40) et un réservoir de fluide (44).

9. Le système d'entraînement selon une des revendications 1 à 8,
**caractérisé en ce que** l'unité de support d'entraînement hydraulique (38) comprend un circuit ouvert.

10. Le système d'entraînement selon une des revendications 1 à 9,
**caractérisé en ce qu'**il n'y a pas de connexion d'échange de fluide entre au moins un circuit hydraulique (30, 34), de préférence chaque circuit hydraulique (30, 34) et l'unité de support d'entraînement hydraulique (38).

11. Le système d'entraînement selon une des revendications 1 à 10,
**caractérisé en ce que** l'unité d'entraînement (26) comprend un moteur à combustion interne de type diesel.

12. Une machine de construction autotractée, en particulier un compacteur de sol, comprenant un système d'entraînement (10) selon une des revendications précédentes.

13. Méthode pour opérer un système d'entraînement, en particulier pour une machine de construction autotractée, en particulier un compacteur de sol, le système d'entraînement comprenant:
- une unité d'entraînement (26),
- au moins un circuit hydraulique (30, 34) avec une pompe hydraulique (32, 36) qui peut être entraînée par l'unité d'entraînement (26),
- un support d'entraînement hydraulique (38) avec un module pompe hydraulique/moteur (40) et au moins un réservoir de fluide sous pression (42), où le module pompe hydraulique/moteur (40) est ou peut être couplé opérationnellement avec l'unité d'entraînement (26) ou/et au moins un circuit hydraulique (30, 34), où le module pompe hydraulique/moteur (40) peut être opéré dans un état de mode de chargement par l'unité d'entraînement (26) ou/et au moins un circuit hydraulique (30, 34) comme une pompe pour charger au moins un réservoir de fluide sous pression (42) et peut être opéré dans un état opératoire de support d'entraînement comme un moteur pour prévoir un couple de support d'entraînement pour la pompe hydraulique (32, 36) d'au moins un circuit hydraulique (30, 34),
où le module pompe hydraulique/moteur (40) peut par cette méthode être opéré dans un état opératoire de recirculation comme une pompe pour transporter du fluide hors d'un réservoir de fluide (44) et dans un réservoir de fluide (44), quand un état de chargement d'au moins un réservoir de fluide sous pression (42) est au-dessus d'un chargement seuil et quand une vitesse de l'unité d'entraînement (26) est au-dessous d'une vitesse seuil prédéterminée.

14. La méthode selon la revendication 13,
**caractérisée en ce que** le module pompe hydraulique/moteur (40) est opéré pendant une période prédéterminée après le dépassement vers le bas de la vitesse seuil pour prévoir l'état opératoire de recirculation quand l'état de chargement d'au moins un réservoir de fluide sous pression (42) est au-dessus d'un chargement seuil prédéterminé.
